# EUROPÄISCHE PATENTSCHRIFT

(11) **EP 2 829 419 B1**
(45) Veröffentlichungstag und Bekanntmachung des Hinweises auf die Patenterteilung: **24.10.2018**
(21) Anmeldenummer: 14168046.2
(22) Anmeldetag: 13.05.2014
(51) Int. Cl.: B60C 9/22

(54) **Fahrzeugluftreifen**
Pneumatic tyres for a vehicle
Pneus de véhicule

(30) Priorität: 26.07.2013 DE 102013108051
(43) Veröffentlichungstag der Anmeldung: 28.01.2015
(73) Patentinhaber: Continental Reifen Deutschland GmbH, 30165 Hannover (DE)
(72) Erfinder: Reese, Wolfgang, 31228 Peine (DE); Bokelmann, Ingo, 30826 Garbsen (DE)
(74) Vertreter: Finger, Karsten

(56) Entgegenhaltungen:
- EP-A1- 0 600 398
- EP-A1- 1 500 526
- EP-A1- 2 174 803
- EP-B1- 1 580 030

## Beschreibung

Die Erfindung betrifft einen Fahrzeugluftreifen mit einer Karkasse, einem Laufstreifen, einem zwischen Laufstreifen und Karkasse angeordneten Gürtel sowie einer an der radial äußeren Seite des Gürtels angeordneten, zumindest eine Bandagenlage aufweisende Gürtelbandage mit in Umfangsrichtung aufgebrachten Festigkeitsträgern, wobei die Gürtelbandage in ihrer axialen Ausdehnung in zwei Seitenbereiche und einen Zentralbereich enthaltend jeweils ein Bandagenlagenteil aufgeteilt ist, wobei die Festigkeitsträger des Bandagenlagenteils im Mittenbereich aus Polyamid 6.6 (PA6.6) gebildet sind und wobei die Festigkeitsträger der Bandagenlagenteile in den beiden Seitenbereichen einen höheren Elastizitätsmodul als PA6.6 aufweisen.

Festigkeitsträger zur Verstärkung von Fahrzeugluftreifen sind hinreichend bekannt. So ist für Fahrzeugluftreifen bekannt, eine Gürtelbandage zu verwenden, die ein- oder mehrlagig ausgebildet ist, die Gürtelränder abdeckt und parallel und im wesentlichen in Umfangsrichtung verlaufende Festigkeitsträger in Form von im Gummi eingebetteten Festigkeitsträger enthält.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in einer der fachkundigen Person bekannten Art mit einer Imprägnierung vorbehandelt sind, in Längsrichtung einen Kalander oder einen Extruder zur Ummantelung mit der Kautschukmischung durchläuft. Oder aber es werden Festigkeitsträger verwendet, die klebrig imprägniert sind und ohne eine kalandrierte Haftmischung verarbeitet werden können.

Diese Gürtelbandage dient dazu, insbesondere im Hochgeschwindigkeitseinsatz, eine Erhebung des Reifen durch die im Fahrbetrieb auftretenden Fliehkräfte zu begrenzen. Zudem sollen die Festigkeitsträger der Gürtelbandage die Gürtellagen, insbesondere die Gürtelkanten für die Schnelllauffestigkeit und Dauerhaltbarkeit niederhalten. Hierfür müssen in den Schulterbereichen des Fahrzeugluftreifens größere Kräfte gebunden werden als im Mittenbereich.

Die Reifenentwicklung geht dahin, die Schnelllauffestigkeit und Dauerhaltbarkeit der Fahrzeugluftreifen zu verbessern.

Aus der EP 1 500 526 A1 ist ein Fahrzeugluftreifen gemäß des Oberbegriffs des Anspruchs 1 bekannt, welcher eine Mittenbandage aus PA6.6 und eine Seitenbandage aus PET aufweist, wobei die Anzahl der Lagen des Seitenbereichs größer ist als die des Mittenbereichs.

Aus der EP 1580030 B1 ist ein Fahrzeugluftreifen bekannt, welcher eine Gürtelbandage aufweist, die in ihrem Mittenbereich ein Bandagenlagenteil aufweist, dessen Corde einen niedrigeren Elastizitätsmodul aufweisen als die Corde von Bandagenlagenteilen in den Seitenbereichen. Im Fahrbetrieb, insbesondere im Hochgeschwindigkeitseinsatz ermöglicht die Verwendung von hochmoduligerem Material in den Seitenbereichen eine gute Bindung der dort auftretenden Kräfte, wohingegen der Fahrzeugluftreifen durch das niedrigmoduligere PA6.6 im Mittenbereich eine runde Kontur entwickelt und somit positive Hochgeschwindigkeitseigenschaften aufweist. Eine solche Gürtelbandage wirkt sich somit positiv auf die Schnelllauffestigkeit und Dauerhaltbarkeit des Fahrzeugluftreifens aus. Insbesondere ist ein Fahrzeugluftreifen mit einer Gürtelbandage bekannt, deren Seitenbereiche Corde enthaltend Polyethylennaphtalat- (PEN) fasern, Aramidfasern oder ein Komposit aus Aramidfasern und Nylonfasern aufweisen, welche ein höheres Elastizitätsmodul als die im Mittenbereich verwendeten Corde aus PA6.6 aufweisen.

Die in den Seitenbereichen verwendeten Materialien weisen allerdings Nachteile auf. PEN und Aramid weisen einen geringen Thermoschrumpf auf. Thermoschrumpf bedeutet eine Dimensionsverkleinerung, also eine definierte Verkürzung, des Festigkeitsträgers unter Wärmeeinfluss. Bei der Reifenherstellung wird der noch grüne Reifenrohling während der Vulkanisation auf etwa 180°C erhitzt. Der geringe Thermoschrumpf von PEN und Aramid gewährleisten keine ausreichende Verkürzung der Festigkeitsträger während der Vulkanisation, so dass die Festigkeitsträger in den Bandagenlagenteilen an der 1. Gürtelkante der Cord in Kompression kommen kann, wodurch im Betrieb Cord-Brüche entstehen können und die Dauerhaltbarkeit des Fahrzeugluftreifens reduziert wird.

Zudem sind Corde und Hybridcorde enthaltend Aramid schwer zu schneiden und verlangen aufwändige Maßnahmen und/oder häufiges Schärfen bzw. Ersetzen des Schneidewerkzeugs. Die Ablängung und Verarbeitung einer Festigkeitsträgerlage aufweisend Corde oder Hybridcorde enthaltend Aramid ist somit nachteilig. Zudem sind die Materialien PEN und Aramid sowie Hybridcorde enthaltend Aramid in ihrer Anschaffung kostenintensiv.

Es ist daher die Aufgabe der vorliegenden Erfindung, einen schnelllauffesten Fahrzeugluftreifen mit einer Gürtelbandage bereitzustellen, welcher dauerhaltbarer und kostengünstiger ist und auf einfache Art und Weise gefertigt werden kann.

Gelöst wird die Aufgabe erfindungsgemäß durch einen Fahrzeugluftreifen gemäß Anspruch 1.

Es ist somit ein Fahrzeugluftreifen geschaffen, dessen Gürtelbandage in ihrem Mittenbereich ein Bandagenlagenteil aufweist, dessen Festigkeitsträger aus PA6.6 gebildet sind, sowie in jedem Seitenbereich ein Bandagenlagenteil aufweist, dessen Festigkeitsträger aus PET gebildet sind.

Bei dem PET handelt es sich um ein normal schrumpfendes Polyethylenterephthalat. Ein solches PET weist einen hohen Thermoschrumpf auf. Der Thermoschrumpf sollte dabei bei 180°C gemäß ASTM D 855 4,5% ± 1,5% betragen.

Überraschenderweise wurde gefunden, dass ein solcher Fahrzeugluftreifen durch eine deutliche bessere Dauerhaltbarkeit auszeichnet und zudem schnelllauffest und kostengünstiger ist und auf einfache Art und Weise gefertigt werden kann.

Der Thermoschrumpf von PET ist größer als der Thermoschrumpf von PEN und Aramid und zeigt damit die oben erwähnten Nachteile nicht. Hierdurch ist eine ausreichende Verkürzung der Festigkeitsträger in Seitenbereichen der Bandagenlage im Zuge der Vulkanisation gewährleistet und ein dauerhaltbarer Fahrzeugluftreifen ist auf einfache Art und Weise zur Verfügung gestellt.

Zudem weist PET einen geringen Unterschied zwischen Thermoschrumpf bei 180°C gemäß ASTM D 855 und Restschrumpf bei Raumtemperatur auf, was sich zusätzlich vorteilhaft auf die Dauerhaltbarkeit des Fahrzeugluftreifens auswirkt.

Das Schneiden bzw. Ablängen von Festigkeitsträgern aus PET ist einfacher und als das Schneiden bzw. Ablängen von Festigkeitsträgern enthaltend Aramid. Hierdurch werden aufwändige Maßnahmen und zusätzliche Prozesse vermieden und der Fahrzeugluftreifen kann auf einfache Art und Weise gefertigt werden.

Zudem sind Festigkeitsträger aus PET in der Regel kostengünstiger und weisen eine bessere Marktverfügbarkeit auf als Festigkeitsträger aus PEN oder Aramid, insbesondere kostengünstiger als Hybridfestigkeitsträger enthaltend Aramid.

Festigkeitsträger aus PET weisen einen höheren Elatizitätsmodul auf als das für die Festigkeitsträger des Bandagenlagenteils im Mittenbereich verwendete Polyamid 6.6 (PA6.6). Im Fahrbetrieb, insbesondere im Hochgeschwindigkeitseinsatz erfolgt somit in den Seitenbereichen eine gute Bindung der dort auftretenden Kräfte, wohingegen der Fahrzeugluftreifen durch das niedrigmoduligere PA6.6 im Mittenbereich eine runde Kontur entwickelt und somit positive Hochgeschwindigkeitseigenschaften aufweist. Eine solche Gürtelbandage wirkt sich somit positiv auf die Schnelllauffestigkeit und Dauerhaltbarkeit des Fahrzeugluftreifens aus.

Somit ist ein schnelllauffester Fahrzeugluftreifen mit einer Gürtelbandage bereitgestellt, welcher dauerhaltbarer und kostengünstiger ist und auf einfache Art und Weise gefertigt werden kann.

Um eine zuverlässige Haftung eines Festigkeitsträgers zum Gummi zu gewährleisten, ist es zweckmäßig, den Festigkeitsträger mit einer Haftimprägnierung, z.B. mit einem RFL-Dip im 1- oder 2-Bad-Verfahren, zu versehen.

Die Gürtelbandage deckt zumindest die radial äußeren Gürtelkanten ab. Die Bandagenlagenteile der Gürtelbandage werden bei der Herstellung des Fahrzeugluftreifens nacheinander oder gleichzeitig aufgebracht, bevorzugt gewickelt oder gespult. Bandagenlagenteile eines Seitenbereichs und des Mittenbereichs einer Bandagenlage werden dabei in axialer Richtung kontaktierend, überlappend oder beabstanded, insbesondere mit einem Überlapp oder Abstand von maximal einer Gummierungsdicke, aufgebracht. Eine hierbei entstehende Lücke zwischen den Bandagenlagenteilen in axialer Richtung wird im weiteren Herstellungsprozess des Fahrzeugluftreifens durch den Gummi der die Lücke umgebenden Bauteile gefüllt. Im fertigen Fahrzeugluftreifen wird dieser Gummi im Folgenden dem axial innen liegenden Bandagenlagenteil zugerechnet. Zwei aneinander angrenzende Bandagenlagenteile können auch denselben Festigkeitsträger aufweisen, welcher durchgehend über die gesamte axiale Breite der beiden Bandagenlagenteile aufgebracht ist.

Erfindungsgemäß weist die Gürtelbandage eine Bandagenlage auf, die im Mittenbereich ein Bandagenlagenteil mit Festigkeitsträgern aus PA6.6 und in jedem der zwei Seitenbereiche ein Bandagenlagenteil mit Festigkeitsträgern aus PET aufweist. Ein Fahrzeugluftreifen mit einer Gürtelbandage enthaltend eine solche Bandagenlage weist eine gute Schnelllauffestigkeit und verbesserte Dauerhaltbarkeit auf.

Zweckmäßig ist es, wenn die Festigkeitsträger der Bandagenlagenteile einer Bandagenlage in ihrer radialen Ausdehnung in etwa übereinstimmen. Hierdurch ergibt sich eine ausgeglichene Kontur der Bandagenlage. Zweckmäßig ist es auch, wenn die Gürtelbandage eine weitere Bandagenlage aufweist.

Erfindungsgemäß weist im Fall von zwei Bandagenlagen die erste und die zweite Bandagenlage, sowohl im Mittenbereich als auch in beiden Seitenbereichen jeweils ein Bandagenlagenteil auf.

Vorteilhaft ist es, wenn jeder der beiden Seitenbereiche eine axiale Breite von 3 % bis 47 %, insbesondere von 5 % bis 30 %, insbesondere von 10 % bis 20 %, der axialen Breite der Gürtelbandage einnimmt, gemessen entlang der Kontur der Gürtelbandage. Eine solche Gürtelbandage gewährleistet, dass die Gürtelkanten bei der Vulkanisation und im Fahrbetrieb optimal niedergedrückt werden. Ein Fahrzeugluftreifen aufweisend eine solche Gürtelbandage weist somit eine optimale Dauerhaltbarkeit und Schnelllauffestigkeit auf.

Es ist vorteilhaft, wenn die Festigkeitsträger des Bandagenlagenteils im Mittenbereich und die Festigkeitsträger der Bandagenlagenteile in den Seitenbereichen mit gleicher Vorspannung aufgebracht sind. Die Festigkeitsträger werden insbesondere gewickelt oder gespult. Die Zugspannung der Festigkeitsträger wird durch die Regelung der Vorspannung gezielt eingestellt. Die Schnelllaufeigenschaften sowie die Dauerhaltbarkeit eines solchen Fahrzeugluftreifens können kostengünstig auf einfache Art und Weise gezielt eingestellt und erhöht werden.

Weiter ist es vorteilhaft, wenn die Festigkeitsträger des Bandagenlagenteils im Mittenbereich mit einer anderen Vorspannung als die Festigkeitsträger der Bandagenlagenteile in den Seitenbereichen aufgebracht sind. Die Festigkeitsträger werden insbesondere gewickelt oder gespult. Die Zugspannung der Festigkeitsträger in den unterschiedlichen Bandagenlagenteilen werden somit durch die Regelung der Vorspannung gezielt auf die unterschiedlichen Ansprüche der unterschiedlichen Bandagenlagenteile eingestellt. Hierdurch erfolgt kostengünstig auf einfache Art und Weise eine weitere gezielte Optimierung der Schnelllaufeigenschaften sowie die Dauerhaltbarkeit eines solchen Fahrzeugluftreifens. Der Fahrzeugluftreifen wird mit einfachen Mitteln den unterschiedlichen Anforderungen, insbesondere bei unterschiedlichem Reifenaufbau und/oder Einsatzbereich, angepasst.

Es ist vorteilhaft, wenn die Festigkeitsträger Garne und/oder Corde sind. Garne und/oder Corde aus PET und/oder PA6.6 sind kostengünstige Festigkeitsträger und weisen eine hohe Marktverfügbarkeit auf.

Im Rahmen der vorliegenden Erfindung stellt ein "Cord" ein linienförmiges Gebilde dar, das aus zwei oder mehr miteinander verdrehten Garnen bestehen. Ein "Garn" ist ein linienförmiges Gebilde mehreren Fasern.

Vorteilhaft ist es, wenn die Festigkeitsträger Garne und/oder Corde sind, wobei die Feinheit der Garne und/oder der Garne der Korde 200 dtex bis 2200 dtex beträgt. Bei einer Feinheit von weniger als 200 dtex wäre eine ausreichende Festigkeit nicht mehr gegeben, während eine Feinheit von mehr als 2200 dtex durch unnötig viel Material Nachteile mit sich bringt, wie z.B. Rollwiderstands-Nachteile des Fahrzeugluftreifens. Bevorzugt weisen die Garne eine Feinheit von 700 dtex bis 1800 dtex auf.

Gemäß einer vorteilhaften Weiterbildung der Erfindung weisen die Corde aus PET ein, zwei oder mehr solcher Garne auf und die Corde aus PA6.6 ein, zwei oder mehr solcher Garne auf. Besonders bevorzugt werden Corde aus PET aus zwei miteinander endverdrehten Garnen der Feinheit 1440 dtex sowie Corde aus PA6.6 aus zwei miteinander endverdrehten Garnen der Feinheit 1400 dtex oder 940 dtex eingesetzt.

Bei dem erfindungsgemäßen Fahrzeugluftreifen handelt sich vorzugsweise um einen PKW-Reifen oder einen Nutzfahrzeugreifen.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Radialschnitt durch einen Fahrzeugluftreifen;
Fig. 2, Fig. 3 sowie Fig.7 eine bzw. zwei Bandagenlagen einer Gürtelbandage eines Fahrzeugluftreifens gemäß der Erfindung;
Fig. 4 bis Fig. 6 jeweils zwei Bandagenlagen einer Gürtelbandage eines Fahrzeugluftreifens.

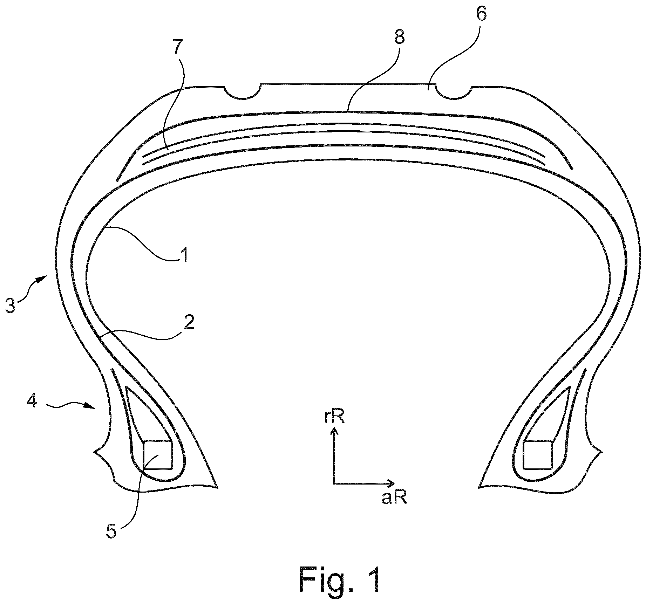

Die Figur 1 zeigt einen radialen Querschnitt durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial oberhalb der Karkasse befindlichen profilierten Laufstreifen 6 und einen zwischen dem Laufstreifen 6 und der Karkasse 2 angeordneten, zwei Festigkeitsträgerlagen beinhaltenden Gürtel 7, welcher radial außen mit der Gürtelbandage 8 abgedeckt ist, welche eine Bandagenlage 9 umfasst. Die Gürtelbandage 8 deckt die Gürtelkanten ab und beinhaltet Festigkeitsträger, die parallel in Umfangsrichtung des Fahrzeugluftreifens entlang der axialen Breite gewickelt sind.

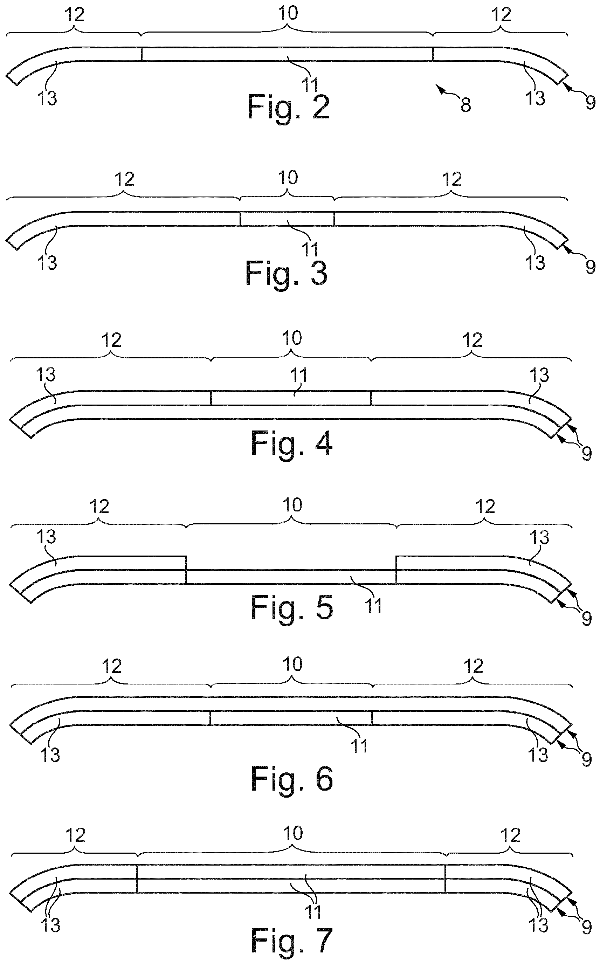

Die Figur 2 zeigt einen radialen Querschnitt durch die Gürtelbandage 8 des in Figur 1 gezeigten Fahrzeugluftreifens 1. Die Gürtelbandage ist in ihrer axialen Ausdehnung in zwei Seitenbereiche 12 und einen Mittenbereich 10 aufgeteilt, welche jeweils ein Bandagenlagenteil 11, 13 enthalten. Die Bandagenlage 9 weist im Mittenbereich 10 ein Bandagenlagenteil 11 auf, dessen Festigkeitsträger aus PA6.6 gebildet sind, und in jedem der Seitenbereiche 12 ein Bandagenlagenteil 13 auf, das zumindest die radial äußere Gürtelkante abdeckt und dessen Festigkeitsträger aus PET gebildet sind. Als Festigkeitsträger werden Corde aus PET aus zwei miteinander verdrehten Garnen der Feinheit 1440 dtex sowie Corde aus PA6.6 aus zwei miteinander verdrehten Garnen der Feinheit 1400 dtex eingesetzt. Hierdurch ergibt sich eine ausgeglichene Kontur der Bandagenlage 9. Die Breite der Bandagenlagenteile 13 in den Seitenbereichen 12 beträgt jeweils in etwa 15% der axialen Breite der Gürtelbandage 8, gemessen entlang der Kontur der Gürtelbandage 8.

Die Figur 3 zeigt einen radialen Querschnitt durch eine Bandagenlage 9 einer Gürtelbandage 8 eines weiteren erfindungsgemäßen Fahrzeugluftreifens. Die Bandagenlage 9 unterscheidet sich von der in Figur 2 gezeigten Bandagenlage 9 dadurch, dass die Breite der Bandagenlagenteile 13 in den Seitenbereichen 12 jeweils in etwa 46% der axialen Breite der Gürtelbandage 8 einnimmt, gemessen entlang der Kontur der Gürtelbandage 8.

Die Figuren 4 bis 6 zeigen jeweils zwei Bandagenlagen 9 einer Gürtelbandage 8 eines Fahrzeugluftreifens.

Die in Figur 4 gezeigte radial innere Bandagenlage 9 ist eine durchgehende Bandagenlage, d.h. die Festigkeitsträger erstrecken sich durchgehend zwischen den Seitenbereichen 12 und dem Mittenbereich 10. Es handelt sich bei den Festigkeitsträgern beispielsweise um Corde aus PA6.6. Die radial äußere der gezeigten Bandagenlagen 9 weist im Mittenbereich 10 ein Bandagenlagenteil 11 auf, dessen Festigkeitsträger Corde aus PA6.6 sind, und in jedem Seitenbereich 12 ein Bandagenlagenteil 13 auf, dessen Festigkeitsträger Corde aus PET sind.

Die in Figur 5 gezeigten Bandagenlagen 9 unterscheiden sich von den in Figur 4 gezeigten Bandagenlagen 9 dadurch, dass die radial äußere Bandagenlage 9 in ihrem Mittenbereich kein Bandagenlagenteil aufweist. Es ist hierbei eine Ausführungsform gezeigt, bei der die radial innere Bandagenlage 9 im Mittenbereich 10 ein Bandagenlagenteil 11 mit Festigkeitsträgern aus PA6.6 aufweist und die radial äußere Bandagenlage 9 in jedem der zwei Seitenbereiche 13 ein Bandagenlagenteil 12 mit Festigkeitsträgern aus PET aufweist, Die vorteilhafte Kombination aus Festigkeitsträgern aus PA6.6 im Mittenbereich 10 und Festigkeitsträgern aus PET in den Seitenbereichen 12 ist bei geringem Materialeinsatz gegeben.

In einer anderen, nicht dargestellten, Ausführungsform ist die in Figur 5 gezeigte Abfolge der beiden Bandagenlagen 9 vertauscht. Die radial innere Bandagenlage 9 weist nur in den Seitenbereichen 12 Bandagenlagenteile 13 auf. Der Mittenbereich 10 der radial inneren Bandagenlage 9 weist kein Bandagenlagenteil auf. Die radial äußere Bandagenlage 9 hingegen ist eine durchgehende Bandagenlage mit Festigkeitsträgern aus PA6.6, die somit in ihrem Mittenbereich 10 ein Bandagenlagenteil 11 mit Festigkeitsträgern aus PA6.6 aufweist. Im fertigen Fahrzeugluftreifen füllt zumindest ein Teil der radial äußeren Bandagenlage 9 den Mittenbereich 10 der radial inneren Bandagenlage 9.

Die in Figur 6 gezeigten Bandagenlagen 9 unterscheiden sich von den in Figur 4 gezeigten Bandagenlagen 9 durch die Reihenfolge ihrer Anordnung in radialer Richtung.

Figur 7 zeigt zwei Bandagenlagen 9, die beide im Mittenbereich 10 Bandagenlagenteile aufweisen, deren Festigkeitsträger Corde aus PA6.6 sind, und beide in den Seitenbereichen 12 Bandagenlagenteile 13 aufweisen, deren Festigkeitsträger Corde aus PET sind.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Bandagenlage
- 10: Mittenbereich
- 11: Bandagenlagenteil im Mittenbereich
- 12: Seitenbereich
- 13: Bandagenlagenteil im Seitenbereich
- rR: radiale Richtung
- aR: axiale Richtung

## Patentansprüche

1. Fahrzeugluftreifen mit einer Karkasse (2), einem Laufstreifen (6), einem zwischen Laufstreifen (6) und Karkasse (2) angeordneten Gürtel (7) sowie einer an der radial äußeren Seite des Gürtels (7) angeordneten, eine oder zwei Bandagenlagen (9) aufweisende Gürtelbandage (8) mit in Umfangsrichtung aufgebrachten Festigkeitsträgern, wobei die Gürtelbandage (8) in ihrer axialen Ausdehnung in zwei Seitenbereiche (12) und einen Mittenbereich (10) enthaltend jeweils ein Bandagenlagenteil (13), (11) aufgeteilt ist, wobei die Festigkeitsträger des Bandagenlagenteils (11) im Mittenbereich (10) aus PA6.6 gebildet sind und wobei die Festigkeitsträger der Bandagenlagenteile (13) in den beiden Seitenbereichen (12) einen höheren Elastizitätsmodul als PA6.6 aufweisen **dadurch gekennzeichnet, dass** jede Bandagenlage (9) der Gürtelbandage (8) in ihrer axialen Ausdehnung in zwei Seitenbereiche (12) und einen Mittenbereich (10) enthaltend jeweils ein Bandagenlagenteil (13), (11) aufgeteilt ist und
dass die Festigkeitsträger der Bandagenlagenteile (13) in den beiden Seitenbereichen (12) aus normal schrumpfendem PET gebildet sind.

2. Fahrzeugluftreifen nach Anspruch 1, **dadurch gekennzeichnet, dass** die Gürtelbandage (8) eine Bandagenlage (9) aufweist, die im Mittenbereich (10) ein Bandagenlagenteil (11) mit Festigkeitsträgern aus PA6.6 und in jedem der zwei Seitenbereiche (12) ein Bandagenlagenteil (13) mit Festigkeitsträgern aus PET aufweist.

3. Fahrzeugluftreifen nach zumindest einem der vorangegangenen Ansprüche, **dadurch gekennzeichnet, dass** jeder der beiden Seitenbereiche (12) eine axiale Breite von 3 % bis 47 %, insbesondere von 5 % bis 30 %, insbesondere von 10 % bis 20 %, der axialen Breite der Gürtelbandage (8) einnimmt, gemessen entlang der Kontur der Gürtelbandage (8).

4. Fahrzeugluftreifen nach zumindest einem der vorangegangenen Ansprüche, **dadurch gekennzeichnet, dass** die Festigkeitsträger des Bandagenlagenteils (11) im Mittenbereich (10) und die Festigkeitsträger der Bandagenlagenteile (13) in den Seitenbereichen (12) mit gleicher Vorspannung aufgebracht sind.

5. Fahrzeugluftreifen nach zumindest einem der vorangegangenen Ansprüche, **dadurch gekennzeichnet, dass** die Festigkeitsträger des Bandagenlagenteils (11) im Mittenbereich (10) mit einer anderen Vorspannung als die Festigkeitsträger der Bandagenlagenteile (13) in den Seitenbereichen (12) aufgebracht sind.

6. Fahrzeugluftreifen nach zumindest einem der vorangegangenen Ansprüche, **dadurch gekennzeichnet, dass** die Festigkeitsträger Garne und/oder Corde sind.

7. Fahrzeugluftreifen nach Anspruch 6, **dadurch gekennzeichnet, dass** die Festigkeitsträger Garne und/oder Corde sind, wobei die Feinheit der Garne und/oder der Garne der Korde 200 dtex bis 2200 dtex, insbesondere 700 dtex bis 1800 dtex, beträgt.

## Claims

1. Pneumatic vehicle tyre with a carcass (2), a tread rubber (6), a breaker belt (7), arranged between the tread rubber (6) and the carcass (2), and also a belt bandage (8), which is arranged on the radially outer side of the breaker belt (7), comprises one or two bandage plies (9) and has reinforcing elements applied in the circumferential direction, the belt bandage (8) being divided in its axial extent into two side regions (12) and a middle region (10), each comprising a bandage ply part (13), (11), the reinforcing elements of the bandage ply part (11) in the middle region (10) being formed from PA 6.6 and the reinforcing elements of the bandage ply parts (13) in the two side regions (12) having a higher modulus of elasticity than PA 6.6,
**characterized in that**
each bandage ply (9) of the belt bandage (8) is divided in its axial extent into two side regions (12) and a middle region (10), each comprising a bandage ply part (13), (11) and
**in that** the reinforcing elements of the bandage ply parts (13) in the two side regions (12) are formed from normally shrinking PET.

2. Pneumatic vehicle tyre according to Claim 1, **characterized in that** the belt bandage (8) comprises a bandage ply (9), which has in the middle region (10) a bandage ply part (11) with reinforcing elements of PA 6.6 and in each of the two side regions (12) a bandage ply part (13) with reinforcing elements of PET.

3. Pneumatic vehicle tyre according to at least one of the preceding claims, **characterized in that** each of the two side regions (12) assumes an axial width of 3% to 47%, in particular of 5% to 30%, in particular of 10% to 20%, of the axial width of the belt bandage (8), measured along the contour of the belt bandage (8) .

4. Pneumatic vehicle tyre according to at least one of the preceding claims, **characterized in that** the reinforcing elements of the bandage ply part (11) in the middle region (10) and the reinforcing elements of the bandage ply parts (13) in the side regions (12) are applied with the same prestress.

5. Pneumatic vehicle tyre according to at least one of the preceding claims, **characterized in that** the reinforcing elements of the bandage ply part (11) in the middle region (10) are applied with a different prestress than the reinforcing elements of the bandage ply parts (13) in the side regions (12).

6. Pneumatic vehicle tyre according to at least one of the preceding claims, **characterized in that** the reinforcing elements are yarns and/or cords.

7. Pneumatic vehicle tyre according to Claim 6, **characterized in that** the reinforcing elements are yarns and/or cords, the fineness of the yarns and/or of the yarns of the cords being 200 dtex to 2200 dtex, in particular 700 dtex to 1800 dtex.

## Revendications

1. Pneumatique de véhicule comprenant une carcasse (2), une bande de roulement (6), une ceinture (7) disposée entre la bande de roulement (6) et la carcasse (2) ainsi qu'un bandage de ceinture (8) disposé du côté radialement externe de la ceinture (7), présentant une ou deux couches de bandage (9), avec des renforts appliqués dans la direction périphérique, le bandage de ceinture (8) étant divisée dans son étendue axiale en deux régions latérales (12) et une région centrale (10) contenant dans chaque cas une partie de couche de bandage (13), (11), les renforts de la partie de couche de bandage (11) dans la région centrale (10) étant formés de PA6.6 et les renforts des parties de couche de bandage (13) dans les deux régions latérales (12) présentant un module d'élasticité plus élevé que le PA6.6,
**caractérisé en ce que**
chaque couche de bandage (9) du bandage de ceinture (8) est divisée dans son étendue axiale en deux régions latérales (12) et une région centrale (10) contenant à chaque fois une partie de couche de bandage (13), (11) et
**en ce que** les renforts des parties de couche de bandage (13) dans les deux régions latérales (12) sont formés à partir de PET à retrait normal.

2. Pneumatique de véhicule selon la revendication 1, **caractérisé en ce que** le bandage de ceinture (8) présente une couche de bandage (9) qui présente, dans la région centrale (10), une partie de couche de bandage (11) avec des renforts en PA6.6 et, dans chacune des deux régions latérales (12), une partie de couche de bandage (13) avec des renforts en PET.

3. Pneumatique de véhicule selon au moins l'une quelconque des revendications précédentes, **caractérisé en ce que** chacune des deux régions latérales (12) occupe une largeur axiale de 3 % à 47 %, en particulier de 5 % à 30 %, en particulier de 10 % à 20 %, de la largeur axiale du bandage de ceinture (8), mesurée le long du contour du bandage de ceinture (8).

4. Pneumatique de véhicule selon au moins l'une quelconque des revendications précédentes, **caractérisé en ce que** les renforts de la partie de couche de bandage (11) dans la région centrale (10) et les renforts des parties de couche de bandage (13) dans les régions latérales (12) sont appliqués avec la même précontrainte.

5. Pneumatique de véhicule selon au moins l'une quelconque des revendications précédentes, **caractérisé en ce que** les renforts de la partie de couche de bandage (11) dans la région centrale (10) sont appliqués avec une précontrainte différente des renforts des parties de couche de bandage (13) dans les régions latérales (12).

6. Pneumatique de véhicule selon au moins l'une quelconque des revendications précédentes, **caractérisé en ce que** les renforts sont des fils et/ou des câbles.

7. Pneumatique de véhicule selon la revendication 6, **caractérisé en ce que** les renforts sont des fils et/ou des câbles, la finesse des fils et/ou des fils des câbles étant de 200 dtex à 2200 dtex, en particulier de 700 dtex à 1800 dtex.
